# EUROPEAN PATENT SPECIFICATION

(11) **EP 2 870 544 B1**
(45) Date of publication and mention of the grant of the patent: **19.06.2019**
(21) Application number: 11801829.0
(22) Date of filing: 29.09.2011
(51) Int. Cl.: G06F 16/957

(54) **METHOD FOR PROVIDING REMOTE SERVER CONTENT TO A WEB BROWSER OF A USER COMPUTER THROUGH A THIRD PARTY SERVER, WEB BROWSER, THIRD PARTY SERVER, AND COMPUTER-READABLE MEDIUM RELATED THERETO**
VERFAHREN ZUR BEREITSTELLUNG VON REMOTE-SERVERINHALTEN AUF EINEM WEBBROWSER EINES BENUTZERCOMPUTERS ÜBER EINEN DRITTANBIETERSERVER, WEBBROWSER, DRITTANBIETERSERVER UND COMPUTERLESBARES MEDIUM DAFÜR
PROCÉDÉ POUR PRÉSENTER LE CONTENU D'UN SERVEUR DISTANT AU NAVIGATEUR WEB D'UN ORDINATEUR D'UTILISATEUR PAR L'INTERMÉDIAIRE D'UN SERVEUR TIERS, NAVIGATEUR WEB, SERVEUR TIERS, ET SUPPORT LISIBLE PAR ORDINATEUR QUI LEUR EST ASSOCIÉ

(43) Date of publication of application: 13.05.2015
(73) Proprietor: Sculpteo, 92130 Issy-les-Moulineaux (FR)
(72) Inventor: CHAPPELIER, Vivien, 35250 Saint-Aubin d'Aubigné (FR); MOREAU, Clément, 92140 Clamart (FR)
(74) Representative: Cabinet Plasseraud
(86) International application number: PCT/IB2011/002820
(87) International publication number: WO 2013/045969

(56) References cited:
- US-A1- 2002 120 693
- US-A1- 2008 077 855
- US-B2- 7 242 406
- DANIEL SWANEY ET AL: "Dynamic Web File Format Transformations with Grace", 5TH INTERNATIONAL WEB ARCHIVING WORKSHOP AND DIGITAL PRESERVATION (IWAW'05), 22 September 2005 (2005-09-22), pages 1-12, XP55024230,

## Description

### FIELD OF THE INVENTION

The instant invention relates to methods for providing remote content to a web browser of a user computer through a third party server, to web browser, to third party servers, and to computer-readable mediums related thereto.

### BACKGROUND OF THE INVENTION

A web browser installed on a user computer is a computer software typically used to retrieve remote content, translate it in a human readable form and display to the user. If the remote content is for instance a text message or an image, the user only have to specify remote content address to the web browser and said browser will be able to retrieve, translate and display this content to the user.
However, a growing number of contents such as videos, sounds or three-dimensional models can not be directly recognized and translated by common web browsers. A typical solution to this problem requires the user to download a piece of software usually called a "plug-in" that is associated with one or several content file formats and will be executed by the web browser each time it has to translate said unrecognized content.

This solution has a number of drawbacks for the content provider as well as for the user. Installing a plug-in can be a cumbersome operation for the user as it requires several steps including finding the plug-in, downloading it and installing it on his computer. These steps can require computer skill from the user, in particular when the plug-in's provider are expecting specific softwares to be previously installed on user computer which the user might have to find on his self. Installing a plug-in also slows down considerably the process of displaying said content and often discourages users to see said content.

Concerning the content provider, it has to ensure that a "plug-in" is available for its content's file format. The development of such a plug-in is generally a extensive task considering the range of web browsers in use and the range of user configurations to be compatible with. Maintaining such a plug-in up to date is also an expensive task which is necessary for the file format to be properly used by users.

An alternative method can be seen for example in US 7,242,406 wherein a third party server generates various displayable representations of a three-dimensional model to be displayed on a user's mobile device without the requirement of installing a plug-in. In the method provided in US 7, 242, 406 the third party server is used as proxy which implies that the entire remote content going to user's computer web browser has to transit through the third party server. Using a proxy thus also has several shortcomings; one being the delay added by the proxy, another is the dependence of the user on the proxy. The large bandwidth needed for the third party server is also expensive to the proxy provider. DANIEL SWANEY ET AL: "Dynamic Web File Format Transformations with Grace",5TH INTERNATIONAL WEB ARCHIVING WORKSHOP AND DIGITAL PRESERVATION (IWAW'05), 22 September 2005, pages 1-12 describes an http proxy server that transparently converts browser-incompatible and obsolete web content into web content that a browser is able to display without the use of plug-ins.

There is thus a need for a method to provide remote content of various types and file formats in a way that is at the same time simple and efficient for the user and also inexpensive and easy to set up for the content provider.

### SUMMARY OF THE INVENTION

To this aim, the invention proposes a method for providing and displaying a remote server content to a user computer provided with a web browser, via a computer network connecting the remote server, the user computer and a third party server, the method comprising at least the following successive steps:
(a) a testing step wherein the ability of said web browser to display content is evaluated;
(b) a conforming step wherein, if the result of the testing step do not satisfy a criterion, a translation of the remote server content in a translated content depending on the result of the testing step is requested to the third party server; and
(c) a displaying step in which a content chosen in the list comprising the remote server content and the translated content is displayed on the web browser, wherein the step of testing is accomplished through the execution of a script by the web browser, wherein the step of conforming is accomplished by using asynchronous communication.

The user may thus retrieve and display content on its computer's web browser in a very simple way and without having to install any piece of software.

In various embodiments of the method, one or more of the following provisions may be used:
- the step of testing comprises testing the ability of the web browser to display at least one file format;
- the step of testing comprises checking the presence of at least one plug-in in the web browser;
- the script used in the step of testing consists in Javascript or VBScript commands;
- the step of conforming comprises at least the following successive operations:
   (a) a request operation wherein the web browser send a request concerning the remote server content to the third party server, the request being based on the result of the testing step;
   (b) a retrieval operation wherein the third party server retrieves the remote server content;
   (c) a translation operation wherein the third party server translates the remote server content in a translated content, based on the request received during the request operation; and
   (d) a sending operation wherein the third party server send back the translated content to the web browser.
- the translation operation comprises operations chosen from a list comprising: rasterizing a three-dimensional content, reducing the complexity of a three-dimensional model, reducing the number of triangle of a three-dimensional model, reducing the size of the texturing images of a three-dimensional model and compressing the remote server content.
- the step of conforming involves using of Javascript or VBScript commands.
- the remote server content consists in a three-dimensional model.
- the translated content is chosen in the list comprising an image and a three-dimensional model.

### BRIEF DESCRIPTION OF THE DRAWINGS

Other characteristics and advantages of the invention will readily appear from the following description of one of its embodiments, provided as a non-limitative examples, and of the accompanying drawings.

On the drawings :
- Figure 1 illustrates an embodiment of a system for using a method of the invention,
- Figure 2 is a flowchart illustrating an embodiment of the method according to the invention.
- Figure 3 is a flowchart illustrating an embodiment of the conforming step according to the invention.

On the different Figures, the same reference signs designate like or similar elements.

### DETAILED DESCRIPTION

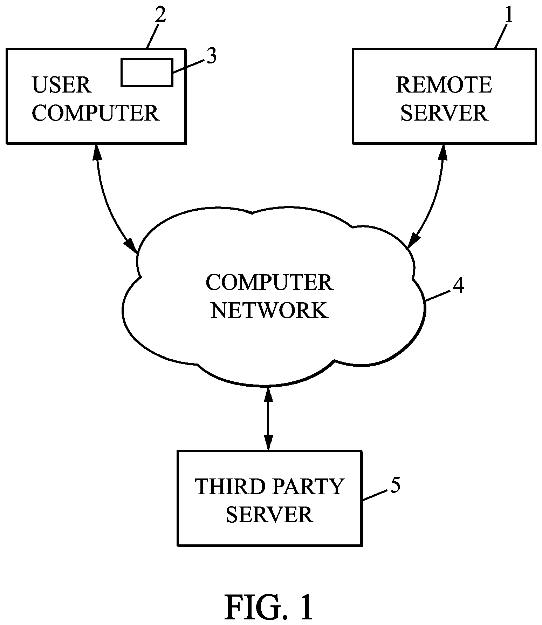

As detailed on Figure 1, the invention provides a method for providing and displaying content from a remote server 1 to a user computer (PC) or other electronic device 2 provided with a web browser 3, via a computer network 4 connecting the remote server 1, the user computer 2 and a third party server 5.

The remote server 1 and the third party server 5 may include several physical servers and the memories and computing processors of these servers can be constituted by memory devices and computing units separated from any physical server.

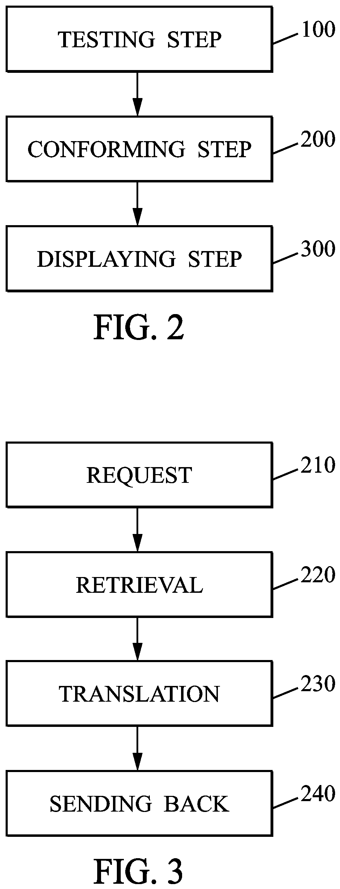

Referring to Figure 2, in a particular embodiment of the present invention, a first testing step 100 consists in an evaluation of the ability of said web browser 3 to display content.

This step may comprise an operation of testing the ability of the web browser 3 to display a list of file formats. It may also comprise an operation consisting in checking the presence of a list of plug-ins in the web browser 3.

In a preferred embodiment, this step 100 is accomplished through the execution of a script by the web browser 3. This script can for example consist in Javascript or VBScript commands.

In a variant of the invention, said script can detect the generation of an error when trying to display a specific content on the web browser 3.

In a preferred embodiment, said script can be included on a web page through the use of a tag, for example an html tag. This way, the inclusion of the script is easy and convenient for the web developer or the content provider.

The testing step 100 gives a result indicating whether the remote server 1 content can be displayed on the web browser 3.

In a conforming step 200, the remote server content will be made to comply with the web browser 3. If the result of the testing step 100 does not satisfy a criterion, the remote browser content will be translated in a translated content to be displayed on the web browser 3. If the result of the testing step 100 satisfies said criterion, the content doesn't have to be translated.

The criterion can be for example, the ability of the web browser 3 to display a specific file format; it can also depend on the size or the complexity of the content and involve the software or hardware configuration of the user computer 2.

The criterion indicates whether the web browser 3 can display the content to the user in satisfactory conditions. If the criterion is not satisfied, the content has to be translated before it can be displayed on the web browser 3.

The conforming step can be accomplished by using asynchronous communication, for instance through the use of Javascript or VBScript commands. The conforming step 200 can be accomplished by the same script used for the accomplishment of the testing step 100.

Eventually, during a displaying step 300, content is displayed on the web browser 3. This content can be the remote server content or the translated content obtained during the conforming step 200.

The conforming step 200 can comprise several successive operations that are detailed on Figure 3.

During a request operation 210, the web browser 3 sends a request concerning the remote server 1 content to the third party server 5, the request being based on the result of the testing step 100.

The third party server 5 then conducts a retrieval operation 220 wherein it retrieves the remote server 1 content indicated in the request.

In a translation operation 230, the third party server 5 translates the remote server 1 content in a translated content, based on the request.

In a sending operation 240, the third party server 5 sends back the translated content to the web browser 3.

The translation operation 230 can consist in a translation from a specific file format to another. In a preferred embodiment, it consists in rasterizing a three-dimensional content. It can also comprise reducing the complexity of a three-dimensional model, reducing the number of triangle of a three-dimensional model, reducing the size of the texturing images of a three-dimensional model and compressing the remote server content.
The content can be an image, a three-dimensional model or any piece of content that can be provided on a computer network 4.

## Claims

1. A method for providing and displaying a remote server content to a user computer (2) provided with a web browser (3), via a computer network (4) connecting the remote server (1), the user computer and a third party server (5), the method comprising at least the following successive steps:
(a) a testing step (100) wherein the ability of said web browser to display content is evaluated;
(b) a conforming step (200) wherein, if the result of the testing step do not satisfy a criterion, a translation of the remote server content in a translated content depending on the result of the testing step is requested to the third party server; and
(c) a displaying step (300) in which a content chosen in the list comprising the remote server content and the translated content is displayed on the web browser, **characterized by**:
the step of testing is accomplished through the execution of a script by the web browser,
the step of conforming is accomplished by using asynchronous communication.

2. A method according to claim 1, wherein the step of testing comprises testing the ability of the web browser to display at least one file format.

3. A method according to any of the preceding claims, wherein the step of testing comprises checking the presence of at least one plug-in in the web browser.

4. A method according to any of the preceding claims, wherein the script used in the step of testing includes Javascript or VBScript commands.

5. A method according to any of the preceding claims, wherein the step of conforming comprises at least the following successive operations:
(a) a request operation (210) wherein the web browser send a request concerning the remote server content to the third party server, the request being based on the result of the testing step;
(b) a retrieval operation (220) wherein the third party server retrieves the remote server content;
(c) a translation operation (230) wherein the third party server translates the remote server content in a translated content, based on the request received during the request operation; and
(d) a sending operation (240) wherein the third party server send back the translated content to the web browser.

6. A method according to claim 5, wherein the translation operation comprises operations chosen from a list comprising: rasterizing a three-dimensional content, reducing the complexity of a three-dimensional model, reducing the number of triangle of a three-dimensional model, reducing the size of the texturing images of a three-dimensional model and compressing the remote server content.

7. A method according to any of the preceding claims, wherein the step of conforming involves using of Javascript or VBScript commands.

8. A method according to any of the preceding claims, wherein the remote server content consists in a three-dimensional model.

9. A method according to any of the preceding claims, wherein the translated content is chosen in the list comprising an image and a three-dimensional model.

## Patentansprüche

1. Verfahren zum Bereitstellen und Anzeigen eines Fernserverinhalts an bzw. auf einem Benutzercomputer (2), der mit einem Webbrowser (3) versehen ist, über ein Computernetzwerk (4), das den Fernserver (1), den Benutzercomputer und einen Drittanbieterserver (5) verbindet, wobei das Verfahren zumindest die folgenden aufeinanderfolgenden Schritte umfasst:
a) einen Prüfschritt (100), bei dem die Fähigkeit des Webbrowsers, Inhalt anzuzeigen, evaluiert wird;
b) einen Anpassungsschritt (200), bei dem, falls das Ergebnis des Prüfschritts ein Kriterium nicht erfüllt, eine Übersetzung des Fernserverinhalts in einen übersetzten Inhalt in Abhängigkeit vom Ergebnis des Prüfschritts beim Drittanbieterserver angefordert wird; und
c) einen Anzeigeschritt (300), bei dem ein Inhalt, der aus der Liste ausgewählt wird, die den Fernserverinhalt und den übersetzten Inhalt umfasst, auf dem Webbrowser angezeigt wird,
**gekennzeichnet durch**:
der Schritt des Prüfens wird durch die Ausführung eines Scripts durch den Webbrowser erreicht,
der Schritt des Anpassens wird unter Verwendung einer asynchronen Kommunikation erreicht.

2. Verfahren nach Anspruch 1, wobei der Schritt des Prüfens ein Prüfen der Fähigkeit des Webbrowsers, mindestens ein Dateiformat anzuzeigen, umfasst.

3. Verfahren nach einem der vorangegangenen Ansprüche, wobei der Schritt des Prüfens ein Überprüfen des Vorhandenseins von mindestens einem Plug-in im Webbrowser umfasst.

4. Verfahren nach einem der vorangegangenen Ansprüche, wobei das Script, das im Schritt des Prüfens verwendet wird, Javascript- oder VBScript-Befehle beinhaltet.

5. Verfahren nach einem der vorangegangenen Ansprüche, wobei der Schritt des Anpassens zumindest die folgenden aufeinanderfolgenden Operationen umfasst:
a) eine Anforderungsoperation (210), bei der der Webbrowser eine Anforderung bezüglich des Fernserverinhalts zum Drittanbieterserver sendet, wobei die Anforderung auf dem Ergebnis des Prüfschritts basiert;
b) eine Abrufoperation (220), bei der der Drittanbieterserver den Fernserverinhalt abruft;
c) eine Übersetzungsoperation (230), bei der der Drittanbieterserver den Fernserverinhalt basierend auf der während der Anforderungsoperation empfangenen Anforderung in einen übersetzten Inhalt übersetzt; und
d) eine Sendeoperation (240), bei der der Drittanbieterserver den übersetzten Inhalt zurück zum Webbrowser sendet.

6. Verfahren nach Anspruch 5, wobei die Übersetzungsoperation Operationen umfasst, die aus einer Liste ausgewählt werden, die Folgendes umfasst: Rastern eines dreidimensionalen Inhalts, Reduzieren der Komplexität eines dreidimensionalen Modells, Reduzieren der Anzahl von Dreiecken eines dreidimensionalen Modells, Reduzieren der Größe der Texturierungsbilder eines dreidimensionalen Modells und Komprimieren des Fernserverinhalts.

7. Verfahren nach einem der vorangegangenen Ansprüche, wobei der Schritt des Anpassens ein Verwenden von Javascript- oder VBScript-Befehlen einbezieht.

8. Verfahren nach einem der vorangegangenen Ansprüche, wobei der Fernserverinhalt aus einem dreidimensionalen Modell besteht.

9. Verfahren nach einem der vorangegangenen Ansprüche, wobei der übersetzte Inhalt aus der Liste ausgewählt wird, die ein Bild und ein dreidimensionales Modell umfasst.

## Revendications

1. Procédé pour fournir et afficher le contenu d'un serveur distant sur un ordinateur d'utilisateur (2) doté d'un navigateur Web (3), par l'intermédiaire d'un réseau informatique (4) connectant le serveur distant (1), l'ordinateur d'utilisateur, et un serveur tiers (5), le procédé comprenant au moins les étapes successives suivantes :
(a) une étape de test (100) dans laquelle la capacité dudit navigateur Web à afficher le contenu est évaluée ;
(b) une étape de conformation (200) dans laquelle, si le résultat de l'étape de test ne répond pas à un critère, une traduction du contenu du serveur distant en un contenu traduit en fonction du résultat de l'étape de test est demandée au serveur tiers ; et
(c) une étape d'affichage (300) dans laquelle un contenu choisi dans la liste comprenant le contenu du serveur distant et le contenu traduit est affiché sur le navigateur Web,
**caractérisé en ce que** :
l'étape de test est accomplie via l'exécution d'un script par le navigateur Web,
l'étape de conformation est accomplie au moyen d'une communication asynchrone.

2. Procédé selon la revendication 1, dans lequel l'étape de test consiste à tester la capacité du navigateur Web à afficher au moins un format de fichier.

3. Procédé selon l'une quelconque des revendications précédentes, dans lequel l'étape de test consiste à vérifier la présence d'au moins un module complémentaire dans le navigateur Web.

4. Procédé selon l'une quelconque des revendications précédentes, dans lequel le script utilisé au cours de l'étape de test inclut des commandes Javascript ou VBScript.

5. Procédé selon l'une quelconque des revendications précédentes, dans lequel l'étape de conformation comprend au moins les opérations successives suivantes :
(a) une opération de demande (210) dans laquelle le navigateur Web envoie une demande relative au contenu du serveur distant au serveur tiers, la demande étant basée sur le résultat de l'étape de test ;
(b) une opération de récupération (220) dans laquelle le serveur tiers récupère le contenu du serveur distant ;
(c) une opération de traduction (230) dans laquelle le serveur tiers traduit le contenu du serveur distant en un contenu traduit, sur la base de la demande reçue durant l'opération de demande ; et
(d) une opération d'envoi (240) dans laquelle le serveur tiers renvoie le contenu traduit au navigateur Web.

6. Procédé selon la revendication 5, dans lequel l'opération de traduction comprend des opérations choisies à partir d'une liste comprenant : la rastérisation d'un contenu tridimensionnel, la réduction de la complexité d'un modèle tridimensionnel, la réduction du nombre de triangles d'un modèle tridimensionnel, la réduction de la taille des images de texturation d'un modèle tridimensionnel, et la compression du contenu du serveur distant.

7. Procédé selon l'une quelconque des revendications précédentes, dans lequel l'étape de conformation implique l'utilisation de commandes Javascript ou VBScript.

8. Procédé selon l'une quelconque des revendications précédentes, dans lequel le contenu du serveur distant consiste en un modèle tridimensionnel.

9. Procédé selon l'une quelconque des revendications précédentes, dans lequel le contenu traduit est choisi dans la liste comprenant une image et un modèle tridimensionnel.
